# EUROPÄISCHE PATENTANMELDUNG

(11) **EP 2 618 125 A1**
(43) Veröffentlichungstag der Anmeldung: **24.07.2013**
(21) Anmeldenummer: 13150451.6
(22) Anmeldetag: 08.01.2013
(51) Int. Cl.: G01N 21/15, G01N 21/952

(54) **Prüfen von stabförmigen Artikeln der Tabak verarbeitenden Industrie**

(30) Priorität: 17.01.2012 DE 102012200611
(71) Anmelder: HAUNI Maschinenbau AG, 21033 Hamburg (DE)
(72) Erfinder: Homann, Stefan, 21029 Hamburg (DE); Klaper, Nils, 21493 Schwarzenbek (DE); Surkau, Sascha, 21339 Lüneburg (DE)
(74) Vertreter: Grebner, Christian Georg Rudolf

(57) **Zusammenfassung**

Die Erfindung betrifft ein Verfahren und eine Anordnung zum Prüfen von stabförmigen Artikeln (50) der Tabak verarbeitenden Industrie, insbesondere Filterzigaretten (50), mittels einer Prüfeinrichtung (44, 45), wobei die stabförmigen Artikel (50) auf einem Förderorgan (34, 35), insbesondere queraxial, gefördert werden und die Artikel (50) mittels einer am Förderorgan (34, 35) vorgesehenen Prüfeinrichtung (44, 45) geprüft werden, wobei die in der Umgebung des Förderorgans (34, 35) vorhandene Umgebungsluft und die durch die in der Umgebungsluft transportierten Partikel (38) vor und/oder nach Eintritt in eine Prüfzone (46, 47) der Prüfeinrichtung (44, 45) durch Beaufschlagen der Umgebungsluft und der Partikel (38) in der Umgebungsluft mit einem Luftvorhang (58, 59), der mittels einer, vorzugsweise an der Prüfeinrichtung (44, 45) und/oder an dem Förderorgan (34, 35) angeordneten, Luftvorhangserzeugungseinrichtung (48, 49), z.B. mit Düsen, erzeugt wird, bewegt, insbesondere beschleunigt und/oder abgelenkt, werden, wobei insbesondere der Luftvorhang (58, 59) in der Prüfzone (46, 47) oder im Bereich der Prüfzone (46, 47), vorzugsweise parallel, beabstandet zur Oberfläche des Förderorgans (34, 35) ausgebildet und gerichtet ist.

## Beschreibung

Die Erfindung betrifft ein Verfahren zum Prüfen von stabförmigen Artikeln der Tabak verarbeitenden Industrie, insbesondere Filterzigaretten, mittels einer Prüfeinrichtung, wobei die stabförmigen Artikel auf einem Förderorgan, insbesondere queraxial, gefördert werden und die Artikel mittels einer am Förderorgan vorgesehen Prüfeinrichtung geprüft werden.

Ferner betrifft die Erfindung eine Anordnung zum Prüfen von stabförmigen Artikeln der Tabak verarbeitenden Industrie, insbesondere Filterzigaretten, mit einem Förderorgan zum, vorzugsweise queraxialen, Fördern der stabförmigen Artikel und mit einer an dem Förderorgan vorgesehenen Prüfeinrichtung zum Prüfen der auf dem Förderorgan geförderten stabförmigen Artikel. Außerdem betrifft die Erfindung eine Maschine der Tabak verarbeitenden Industrie, insbesondere Filteransetzmaschine.

Unter der Bezeichnung "MAX" ist eine Filteransetzmaschine der Patentanmelderin bekannt.

Als Filteransetzmaschine wird eine Vorrichtung bzw. Maschine zur Herstellung von Filterzigaretten verstanden mit Mitteln zur Aufnahme von Tabakstöcken doppelter Länge mit Mitteln zum Schneiden dieser doppeltlangen Tabakstöcke in Tabakstöcke einfacher Länge, mit Mitteln zum Einbringen von Filterstopfen doppelter Länge zwischen die Tabakstöcke einfacher Länge, mit Mitteln zum Verbinden des doppeltlangen Filterstopfens mit den beiden Tabakstöcken einfacher Länge durch Umhüllen mit einem Belagpapierblättchen, das mittels einer Schneideinrichtung von einem zugeführten Belagpapierstreifen abgetrennt wird, mit Mitteln zum nachfolgenden Ausführen eines Trennschnitts durch den doppeltlangen Filterstopfen, so dass Filterzigaretten normaler Gebrauchslänge entstehen.

Nach der Herstellung der Filterzigaretten werden eine Dichtigkeitsprüfung und/oder mindestens eine Kopfendenprüfung und/oder eine Ventilationsgrad-Prüfung und/oder mindestens eine optische Prüfung der Zigaretten in der Filteransetzmaschine ausgeführt. Bei der Dichtigkeitsprüfung wird auf einer Prüftrommel jede einzelne Zigarette mit Prüfluft beaufschlagt. Weicht der gemessene Druck dabei von einem Sollwert ab, ist die betreffende Zigarette fehlerhaft und wird ausgeworfen. Bei der Kopfendenprüfung prüft ein beispielsweise kapazitiver Messwertaufnehmer die Tabakdichte in den Kopfenden der Zigaretten. Bei der Ventilationsgrad-Prüfung werden die Zigaretten mit Prüfluft beaufschlagt. Das gemessene Druckverhältnis Ausgang/Eingang verhält sich proportional zum Ventilationsgrad der Zigarette.

Darüber hinaus werden an einer Filteransetzmaschine die Produkte bzw. hergestellten stabförmigen Artikel bzw. Filterzigaretten durch optische Prüfeinrichtungen untersucht. Bei einer optischen Prüfung werden üblicherweise Qualitätsmerkmale an den Produkten der Tabak verarbeitenden Industrie detektiert wie Löcher, Dimensionen, Objektidentifizierung, Stempel, Leimauftrag, Flecken, das Vorhandensein von Filterelementen, Beschädigung und dergleichen. Unter Produkten der Tabak verarbeitenden Industrie werden im Rahmen der vorliegenden Patentanmeldung insbesondere stabförmige Artikel bzw. Objekte wie Zigaretten, Filterstäbe, Multisegmentfilterstäbe und dergleichen verstanden.

Zur optischen Kontrolle werden üblicherweise Zeilen- oder Matrixkameras eingesetzt, die wegen der Anforderungen an die Abbildungs- und Aufnahmequalität mit aufwändigen, großen Objektiven ausgestattet sind. Um z.B. die gesamte Zigarettenlänge ohne Verzerrung und Beeinträchtigung der Schärfe zu betrachten, ist ein großer Abstand des Messobjektes zur Kamera notwendig. Es kommt an einigen Stellen an der Maschine der Tabak verarbeitenden Industrie, beispielsweise einer Filteransetzmaschine, vor, dass der optische Weg mit Spiegeln mehrfach gefaltet werden muss.

Die Beleuchtung der Messobjekte bzw. der stabförmigen Produkte der Tabak verarbeitenden Industrie wird mit separaten Lichtquellen realisiert, die wegen des großen Abstandes zum Objekt hohe Lichtstärken besitzen müssen. Es ist unter anderem auch bekannt, das Licht unter Intensitätsverlust mit Lichtleitkabeln an das Messobjekt heranzuführen. Dadurch dass in der staubigen Umgebung einer Maschine der Tabak verarbeitenden Industrie herumfliegende Partikel, wie z.B. Tabakstaub, Tabakkrümel, Papierstückchen, die optische Kontrolle stören und es zu Fehlbewertungen kommt, kann es wegen des großen Abstandes der verwendeten Kontrolleinrichtungen bzw. Prüfeinrichtungen nur durch aufwändige Maßnahmen reduziert werden.

Beispielsweise ist aus DE-A-10 2004 040 912 eine Einrichtung zur optischen Kontrolle von Produkten der Tabak verarbeitenden Industrie bekannt, die eine Bilderfassungsvorrichtung umfasst, wobei Gradientenindexlinsen verwendet werden, um den Abstand zwischen der Bilderfassungsvorrichtung und den zu kontrollierenden Produkten zu verringern.

Weiterhin offenbart EP-B-0 812 548 eine Vorrichtung zur Überwachung der äußeren Unversehrtheit von Zigaretten, die an einer Mehrzahl von Matrixkameras queraxial auf einer Fördertrommel vorbeigefördert werden und auf dem Förderweg um ihre Längsachse rotiert werden.

Ferner ist bekannt, dass beispielsweise während der Herstellung von Filterzigaretten an einer Filteransetzmaschine aufgrund der Handhabung bzw. der Manipulation der Filterzigaretten Mengen an Tabakstaub oder Kurztabakteilchen entstehen, die sich in der Maschine lose anlagern und diese zusetzen können. Aus DE-A-103 17 770 ist ein beispielsweise ein Verfahren zum Reinigen eine Zigarettenherstellmaschine beschrieben, wobei die Maschine für die Durchführung der Reinigung stillgesetzt ist.

Ausgehend von diesem Stand der Technik besteht die Aufgabe der Erfindung darin, bei der, insbesondere optischen, Prüfung von stabförmigen Produkten der Tabak verarbeitenden Industrie, bei denen beispielsweise die gesamte Oberfläche der stabförmigen Artikel kontrolliert wird, Störeinflüsse während des Herstellungsprozesses an einer Maschine der Tabak verarbeitenden Industrie zu verringern.

Gelöst wird diese Aufgabe durch ein Verfahren zum Prüfen von stabförmigen Artikeln der Tabak verarbeitenden Industrie, insbesondere Filterzigaretten, mittels einer Prüfeinrichtung, wobei die stabförmigen Artikel auf einem Förderorgan, insbesondere queraxial, gefördert werden und die Artikel mittels einer am Förderorgan vorgesehen Prüfeinrichtung geprüft werden, das dadurch weitergebildet wird, dass die in der Umgebung des, insbesondere angetriebenen, Förderorgans vorhandene Umgebungsluft und die durch die in der Umgebungsluft transportierten Partikel vor und nach Eintritt in eine Prüfzone der Prüfeinrichtung durch Beaufschlagen der Umgebungsluft und der Partikel in der Umgebungsluft mit einem Luftvorhang, der mittels einer an dem Förderorgan angeordneten Luftvorhangserzeugungseinrichtung erzeugt wird, bewegt, insbesondere beschleunigt und/oder abgelenkt, werden, wobei insbesondere der Luftvorhang in der Prüfzone oder im Bereich der Prüfzone, vorzugsweise parallel, zur Oberfläche des Förderorgans ausgebildet und gerichtet ist.

Vorzugsweise werden die stabförmigen Artikel zur Prüfung auf einer Prüftrommel als Förderorgan gefördert und mittels einer zur Prüftrommel beabstandeten Prüfeinrichtung geprüft, wobei der zwischen dem Förderorgan und der Prüfeinrichtung erzeugte Luftvorhang mittels einer Luftvorhangserzeugungseinrichtung bewirkt wird. Die Luftvorhangserzeugungseinrichtung ist dabei insbesondere an der Prüfeinrichtung und/oder am Förderorgan oder zwischen der Prüfeinrichtung und dem Förderorgan angeordnet. Vorzugweise ist dabei der Luftvorhang in der Prüfzone oder im Bereich der Prüfzone nicht auf die Oberfläche des Förderorgans und/oder nicht auf die Oberfläche der stabförmigen Artikel ausgebildet und gerichtet.

Die Erfindung beruht auf dem Gedanken, dass durch die Ausbildung eines Luftvorhangs im Bereich der Prüfzone zwischen der Prüfeinrichtung und den zu prüfenden stabförmigen Artikeln auf dem Förderorgan, insbesondere Fördertrommel, die Prüfmessung störende Partikel in der Umgebungsluft des Förderorgans, die durch die Bewegung der Förderorgane bzw. der Prüftrommeln mitgerissen werden, durch Beaufschlagung mit einem Luftvorhang die Partikel in der Prüfzone aus dieser entfernt werden, so dass die Kontamination von herumfliegenden Partikeln während der Prüfung in der Prüfzone deutlich herabgesetzt ist. Dadurch werden vor der auszuführenden Prüfung der Artikel die mitgerissenen Partikel aus der Prüfzone auf einfache Weise entfernt, wodurch die Qualität der Prüfung signifikant erhöht wird, da weniger Störsignale durch die in der Luftströmung mitgerissenen und vor der Prüfung der Partikel entfernten Partikel entstehen. Insgesamt wird dadurch eine partikelarme Umgebung in der Prüfzone bzw. im Erfassungsbereich der Prüfeinrichtung während des Herstellungsprozesses z.B. an einer Filteransetzmaschine erreicht. Hierbei ist erfindungsgemäß vorgesehen, dass der mit einer vorbestimmten Luftströmungsgeschwindigkeit ausgebildete Luftvorhang nicht auf die Prüfeinrichtung und auch nicht auf die in die Prüfzone geförderten Artikel gerichtet ist. Dazu wird der Luftvorhang im Bereich, d.h. in der Prüfzone, zwischen der Prüfeinrichtung und den zu prüfenden Artikeln von Störpartikeln freigehalten. Hierbei werden an einer Prüftrommel, an der eine Prüfung der stabförmigen Artikel stattfindet, die durch die Trommelbewegung bzw. die durch die infolge der Rotationsbewegung der Trommeln in der Luft mitbewegten Partikel, wie z.B. Tabakkrümel oder dergleichen, im trommelnahen Bereich aus der Prüfzone entfernt oder gelangen aufgrund der Strömungsrichtung des Luftvorhangs erst gar nicht in den Bereich der Prüfzone, wodurch die Störpartikeldichte im Bereich der Prüfzone signifikant herabgesetzt wird.

Darüber hinaus werden an der Prüfeinrichtung durch den Luftvorhang die Partikel, die in den Bereich der Prüfzone hineingelangen, durch die Luftströmung derart beschleunigt, dass diese bei einer optischen Prüfung der Oberfläche der Artikel so schnell sind, wodurch diese von der optischen Erkennungseinrichtung oder Prüfeinrichtung verzerrt, nicht der realen Größe entsprechend verfremdet oder gegebenenfalls unter Umständen gar nicht aufgezeichnet werden können. Selbst wenn dennoch die durch den Luftvorhang in der Prüfzone beschleunigten Partikel von der Prüfeinrichtung erfasst werden, so können anhand der erfassten Störsignatur durch den oder die in der Prüfzone beschleunigten Partikel aufgrund der schnellen Bewegungskomponente diese bei der Auswertung der Störsignatur in der Auswerteeinheit leicht ermittelt werden und gegebenenfalls für die weitere Auswertung unberücksichtigt bleiben.

Aufgrund der Rotationsbewegung der Fördertrommel, an der die Prüfung der stabförmigen Artikel stattfindet, ist die höchste Strömungsgeschwindigkeit der Umgebungsluft, die von der Trommel mitbewegt wird, im Bereich der Trommeloberfläche am größten und nimmt im Entfernungsbereich von 10 mm bis 20 mm signifikant ab. Typischerweise beträgt die Strömungsgeschwindigkeit der mitbewegten Luft in wenigen Zentimetern Entfernung von der Trommeloberfläche zwischen 0,1 m/s bis 0,5 m/s. Dadurch, dass die von der Umgebungsluft mitgerissenen Partikel durch den Eintritt in den Luftvorhang mit einer Strömungsgeschwindigkeit von mindestens 1 m/s, beispielsweise > 10 m/s, vorzugsweise > 20 m/s, und mit einem höheren Impuls beaufschlagt werden, werden die Teilchen aus der Prüfzone ferngehalten oder aus der Prüfzone entfernt.

Darüber hinaus zeichnet sich in einer Ausgestaltung das Verfahren dadurch aus, dass die mit der Umgebungsluft bewegten Partikel in ihrer Flugbahn über die Breite und/oder über die Länge der Prüfzone mittels des erzeugten Luftvorhangs beschleunigt und/oder abgelenkt werden.

Weiterhin zeichnet sich das Verfahren dadurch aus, dass durch die Erzeugung des Luftvorhangs die Ablagerung von Partikeln auf der Oberfläche von Schutzscheiben oder von Objektiven der Prüfeinrichtungen oder der Prüfsysteme vermieden oder nachhaltig weitestgehend verhindert wird.

Überdies ist es bei einer Weiterbildung des Verfahrens vorgesehen, dass bei Beaufschlagen der in der Umgebungsluft vorhandenen und durch die an einem Förderorgan mitgeförderte Umgebungsluft bewegten Partikel mittels des Luftvorhangs die Partikelanzahl sowie die Partikeldichte in der Prüfzone herabgesetzt ist oder wird. Hierdurch wird erreicht, dass Partikel bzw. Tabakkrümel unmittelbar vor der Prüfzone bzw. dem Messort entfernt sind, wodurch die Konzentration der Partikel in den Messbereichen bzw. der Prüfzone der Prüfeinrichtung signifikant sowie drastisch herabgesetzt ist.

Ferner ist es bei einer Ausgestaltung des Verfahrens günstig, wenn die Luftvorhangserzeugungseinrichtung derart benachbart am und beabstandet zum Förderorgan, vorzugsweise an der Prüfeinrichtung, angeordnet ist, dass die Luftströmung des erzeugten Luftvorhangs in Förderrichtung des Förderorgans oder gegen die Förderrichtung des Förderorgans gerichtet ist. Vorzugsweise ist die Luftströmung des Luftvorhangs im Wesentlichen parallel zur Oberfläche des als Prüftrommel ausgebildeten Förderorgans ausgebildet sowie ausgerichtet. Dabei werden bei Ausbildung der Strömungsrichtung des Luftvorhangs in Förderrichtung des Förderorgans die Partikel aus der Prüfzone beschleunigt und aus dem Bereich der Prüfeinrichtung entfernt. Bei Ausbildung einer Luftströmung des Luftvorhangs entgegen der Förderrichtung des Förderorgans werden die von der an der z.B. rotierenden Fördertrommel Umgebungsluft mitgerissenen Partikel davon abgehalten, in die Prüfzone der Prüfeinrichtung einzutreten.

Bei einer bevorzugten Ausgestaltung ist es außerdem vorgesehen, dass die Luftvorhangserzeugungseinrichtung derart benachbart am und beabstandet zum, insbesondere als Prüftrommel ausgebildeten, Förderorgan angeordnet ist, dass die Luftströmung des erzeugten Luftvorhangs quer, insbesondere senkrecht, zur Förderrichtung des Förderorgans gerichtet ist und vorzugsweise im Wesentlichen parallel zur Oberfläche des als Prüftrommel ausgebildeten Förderorgans ausgerichtet ist. Hierbei ist bei einem queraxial fördernden Förderorgan, insbesondere einer Fördertrommel, die Strömungsrichtung des Luftvorhangs parallel oder im Wesentlichen parallel zu den Längsachsen der stabförmigen Artikel ausgerichtet.

Vorzugsweise ist bei einer Weiterbildung des Verfahrens außerdem vorgesehen, dass die Luftströmungsgeschwindigkeit des durch die Luftvorhangserzeugungseinrichtung erzeugten Luftvorhangs größer als die Fördergeschwindigkeit der auf dem Förderorgan, insbesondere Fördertrommel oder Prüftrommel, geförderten stabförmigen Artikel ist, wobei insbesondere die Luftströmungsgeschwindigkeit des Luftvorhangs mindestens 1 m/s, vorzugsweise mehr als 10 m/s, weiter vorzugsweise mehr als 20 m/s, beträgt.

Ferner zeichnet sich das Verfahren dadurch aus, dass der zur Erzeugung des Luftvorhangs bereitgestellte oder erforderliche Überdruck an der Luftaustrittsöffnung der Luftvorhangserzeugungseinrichtung, insbesondere Düsen, derart groß ist, dass die Strömungsgeschwindigkeit und der entsprechende Volumenstrom im Bereich des Luftvorhangs erzeugt werden oder erzeugbar sind. Die hierzu erforderlichen Drücke werden durch die geometrischen Eigenschaften der Zuleitungen zu den Luftaustrittsöffnungen oder Luftaustrittsstellen (mit-)bestimmt. Weiterhin sind je nach Verfahrensprinzip und je nach Anforderungen unterschiedliche Kombinationen von Strömungsgeschwindigkeiten und bereitgestellten Volumenströmen sinnvoll und entsprechend vorgesehen.

Des Weiteren ist es bei dem Verfahren bevorzugt, dass mittels der Prüfeinrichtung die Oberfläche der auf dem Förderorgan, insbesondere Prüftrommel, geförderten stabförmigen Artikel mittels einer optischen Kontrolleinrichtung, insbesondere Kamerasystem, optisch erfasst wird und anschließend beispielsweise unter Verwendung einer Auswerteeinrichtung unmittelbar ausgewertet wird. Dabei ist im Rahmen der Auswertung der Messergebnisse vorgesehen, dass ein als fehlerhaft erkannter stabförmiger Artikel weiter nachfolgend beispielsweise an der Produktionsmaschine bzw. Filteransetzmaschine ausgeschleust wird.

Überdies wird die Aufgabe gelöst durch eine Anordnung zum Prüfen von stabförmigen Artikeln der Tabak verarbeitenden Industrie, insbesondere Filterzigaretten, mit einem Förderorgan zum, vorzugsweise queraxialen, Fördern der stabförmigen Artikel und mit einer an dem Förderorgan vorgesehenen Prüfeinrichtung zum Prüfen der auf dem Förderorgan geförderten stabförmigen Artikel, die dadurch weitergebildet wird, dass eine Luftvorhangserzeugungseinrichtung, vorzugsweise benachbart, an dem Förderorgan vorgesehen ist, derart, dass die in der Umgebung des Förderorgans vorhandene Umgebungsluft und die durch die in der Umgebungsluft transportierten Partikel durch Beaufschlagen der Umgebungsluft und der Partikel in der Umgebungsluft vor und/oder nach Eintritt in eine Prüfzone der Prüfeinrichtung mit einem Luftvorhang, der mittels einer, vorzugsweise am Förderorgan und/oder an der Prüfeinrichtung angeordneten, Luftvorhangserzeugungseinrichtung erzeugbar ist, bewegbar, insbesondere beschleunigbar, sind, wobei insbesondere der Luftvorhang in der Prüfzone oder im Bereich der Prüfzone, vorzugsweise parallel, beabstandet zur Oberfläche des wenigstens einen Förderorgans ausgebildet und gerichtet ist, wodurch der erzeugte Luftvorhang nicht auf die Oberfläche des Förderorgans und/oder nicht auf die Oberfläche der stabförmigen Artikel gerichtet ist.

Hierbei ist die Anordnung vorzugsweise mit wenigstens einem als Prüftrommel ausgebildeten Förderorgan ausgebildet, wobei die Luftvorhangserzeugungseinrichtung benachbart zur Prüftrommel angeordnet ist.

Dadurch, dass lokal im Bereich der Prüfzone einer Prüfeinrichtung die von der Fördertrommel mitgerissenen Partikel bzw. Tabakkrümel aus der Prüfzone entfernt oder von der Prüfzone abgehalten werden, wird die Belastung der Partikel, die zu Störsignalen in der Prüfzone der Prüfeinrichtung führen könnten, herabgesetzt. Dadurch wird die Prüfsicherheit sowie der Wirkungsgrad der Prüfeinrichtung an einer Filteransetzmaschine deutlich erhöht, da die Störsignale durch Tabakkrümel oder Partikel oder dergleichen bei insbesondere optischen Prüfungen der Filterzigaretten signifikant herabgesetzt und damit unberechtigte Produktauswürfe an der Herstellungsmaschine vermieden werden. Insgesamt wird dadurch die Konzentration von in der Umgebungsluft mitbewegten Partikeln zwischen dem Förderorgan und der Prüfzone aufgrund des durch die Luftvorhangserzeugungseinrichtung erzeugten Luftvorhangs vermindert, wodurch eine verbesserte optische Kontrolle der stabförmigen Artikel ermöglicht wird.

Vorzugsweise ist die Luftvorhangserzeugungseinrichtung derart, vorzugsweise an der Prüfeinrichtung und/oder am Förderorgan, angeordnet, dass die Luftströmung des erzeugten Luftvorhangs in Förderrichtung des Förderorgans oder gegen die Richtung des Förderorgans gerichtet ist und wobei die Luftströmung des Luftvorhangs im Wesentlichen parallel zur Oberfläche des Förderorgans ausgerichtet ist.

Außerdem ist es bei einer (alternativen) Weiterbildung der Anordnung bevorzugt, dass die Luftvorhangserzeugungseinrichtung derart, vorzugsweise an der Prüfeinrichtung und/oder am Förderorgan, angeordnet ist, dass die Luftströmung des erzeugten Luftvorhangs quer, insbesondere senkrecht, zur Förderrichtung des Förderorgans gerichtet ist und wobei insbesondere die Luftströmung im Wesentlichen parallel zur Oberfläche des als Prüftrommel ausgebildeten Förderorgans ausgerichtet ist.

Gemäß einer bevorzugten Ausführungsform ist weiterhin vorgesehen, dass die Prüfeinrichtung als optische Kontrolleinrichtung für die Oberfläche der stabförmigen Artikel z.B. als Kamerasystem ausgebildet ist.

Des Weiteren ist es bei einer Ausführungsform der Anordnung vorteilhaft, dass die Anordnung unter Verwendung der voranstehend beschriebenen Luftvorhangserzeugungseinrichtung gemäß dem voranstehend beschriebenen Verfahren betreibbar ist oder betrieben wird.

Im Rahmen der Erfindung wird unter dem Begriff "Prüftrommel" eine Fördertrommel der Tabak verarbeitenden Industrie für die Förderung von stabförmigen Artikeln wie beispielsweise Zigaretten, Doppelzigaretten, Filterstäbe oder Multifilterstäbe und dergleichen in queraxialer Richtung verstanden, wobei die Prüftrommel Mittel zum Prüfen aufweist oder trägt und/oder wobei benachbart zur Fördertrommel Mittel zum Prüfen der geförderten stabförmigen Artikel angeordnet oder vorgesehen sind, wobei unter Verwendung der Mittel zum Prüfen auf optische, elektrische und/oder mechanische Weise die stabförmigen Artikel auf der Fördertrommel geprüft werden.

Ferner wird die Aufgabe gelöst durch eine Maschine der Tabak verarbeitenden Industrie, insbesondere Filteransetzmaschine, die mit wenigstens einer, vorzugsweise zwei, Anordnung zum Prüfen von stabförmigen Artikeln der Tabak verarbeitenden Industrie, insbesondere Filterzigaretten, wie voranstehend beschrieben, ausgebildet ist. Zur Vermeidung von Wiederholungen wird auf die obigen Ausführungen zur Anordnung sowie zum Verfahren ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch einen Abschnitt einer Filteransetzmaschine in einer Vorderansicht,
- Fig. 2: schematisch eine Trommelanordnung einer Filteransetzmaschine mit zwei Prüfeinrichtungen und
- Fig. 3a bis 3c: jeweils eine Ausführungsform eines Prüforgans für Fördertrommeln der Tabak verarbeitenden Industrie, die mit Luftvorhangserzeugungseinrichtungen ausgebildet sind.
- Fig. 4: schematisch den prinzipiellen Aufbau einer Drucklufterzeugungsanlage zur Erzeugung eines Luftvorhangs für eine Maschine der Tabak verarbeitenden Industrie an einer Prüftrommel oder dergleichen.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

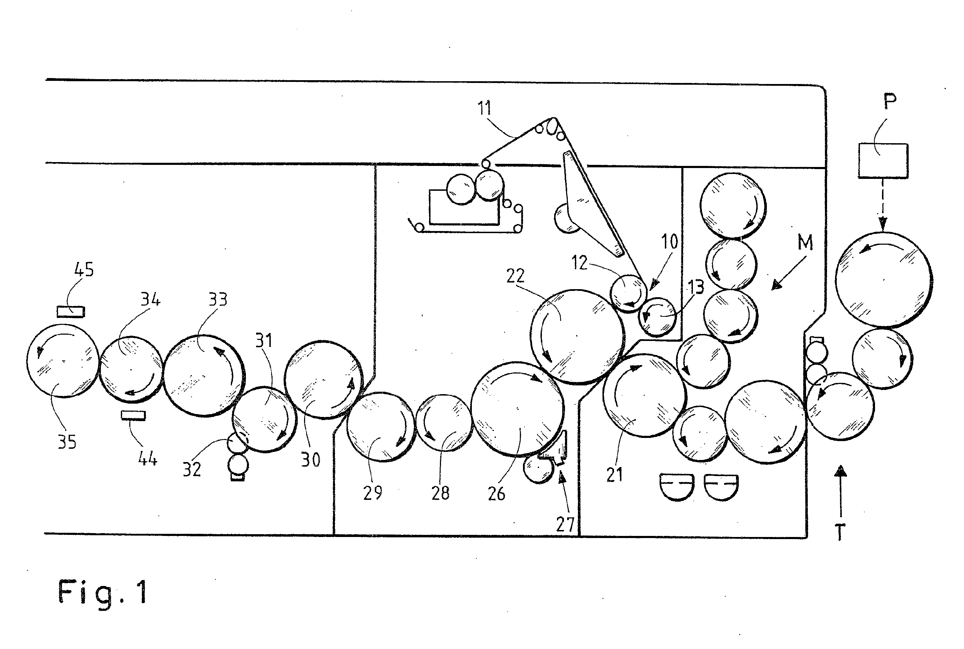

In Fig. 1 ist eine Filteransetzmaschine in einer Vorderansicht ausschnittsweise dargestellt, wobei die Filteransetzmaschine über eine Trommelanordnung T zur Zuführung von Tabakstöcken von einer schematisch eingezeichneten Zigarettenstrangmaschine P Tabakstöcke doppelter Gebrauchslänge empfängt. Eine Zigarettenstrangmaschine ist unter der Bezeichnung "PROTOS" der Patentanmelderin bekannt.

Auf ihrem Förderweg zu einer Zusammenstelltrommel 21 werden die Tabakstöcke doppelter Gebrauchslänge geschnitten und längsaxial gespreizt. Auf der Zusammenstelltrommel 21 werden über eine weitere Trommelanordnung M doppeltlange Filterstopfen transportiert, die jeweils zwischen zwei längsaxial beabstandete Tabakstöcke eingefügt werden. Hierdurch wird auf der Zusammenstelltrommel 21 eine Folge von queraxial hintereinander angeordneten Tabakstock-Filterstopfen-Tabakstock-Gruppen gebildet. Die zusammengestellten Artikelgruppen werden von der Zusammenstelltrommel 21 an eine Fördertrommel 22 übergeben.

Ein beleimter und geförderter Belagpapierstreifen 11 wird in einem Belagapparat 10 auf einer Schneidtrommel 12 von den Messern einer Messertrommel 13 in Belagblättchen bzw. Verbindungsblättchen geschnitten. Die geschnittenen Verbindungsblättchen werden jeweils an die Artikelgruppen bzw. Tabakstock-Filterstopfen-Tabakstock-Gruppen auf der Fördertrommel 22 übergeben bzw. angeheftet. In DE-C-39 18 137 ist ausführlich ein Belagapparat beschrieben, der vollumfänglich in den Inhalt der vorliegenden Anmeldung aufgenommen wird.

Nach dem Anheften der geschnittenen und der einzelnen Verbindungsblättchen an jeweils eine Artikelgruppe werden die Artikelgruppen weiter zu einer nachfolgenden Rolltrommel 26 und einer Rolleinrichtung 27 transportiert, mittels der die Verbindungsblättchen vollständig um die Tabakstock-Filterstopfen-Tabakstock-Gruppen herumgewickelt werden. Die Rolleinrichtung 27 besteht in einer Ausgestaltung aus einem Stegrad, einer Rollhand mit einer Rollfläche und ausgangsseitig einer Rollwalze, wobei die Rollfläche und die Rolltrommel 26 einen Rollkanal bilden, in dem Artikelgruppen mit den Verbindungsblättchen umwickelt werden, womit doppeltlange Filterzigaretten gebildet werden.

Die doppeltlangen Filterzigaretten werden nachfolgend an eine Fördertrommel 28 und weiter nachfolgend an eine weitere Fördertrommel 29 übergeben und für den weiteren Bearbeitungsprozess an einer Filteransetzmaschine bereitgestellt.

Von der Fördertrommel 29 werden die doppeltlangen Filterzigaretten über eine Fördertrommel 30 zu einer Schneidtrommel 31 gefördert, an der ein Schneidmesser 32 angeordnet ist, welches aus den doppeltlangen Filterzigaretten durch einen mittigen Trennschnitt Filterzigaretten einfacher Gebrauchslänge herstellt.

Die Filterzigaretten werden anschließend von der Schneidtrommel 31 an eine Spreiztrommel 33 übergeben. Auf der Spreiztrommel 33 werden die Filterzigarettenpaare längsaxial voneinander beabstandet und anschließend an eine erste Prüftrommel 34 übergeben. An der als Förderorgan ausgebildeten Prüftrommel 34 ist ein erstes Prüforgan 44 angeordnet, welches die Filterzigaretten einer ersten Prüfung, z.B. einer Kopfendenprüfung, unterzieht.

Im Rahmen der Erfindung ist es möglich, dass die hergestellten Filterzigaretten an dem ersten als Prüfeinrichtung ausgebildeten Prüforgan 44 einer optischen Prüfung unterzogen werden.

Anschließend werden die Zigaretten von der Prüftrommel 34 an eine nachfolgende zweite Prüftrommel 35 übergeben, an der ein zweites als Prüfeinrichtung ausgebildetes Prüforgan 45 angeordnet ist, um die Zigaretten weiteren Qualitätsprüfungen, insbesondere einer weiteren optischen Prüfung zu unterziehen.

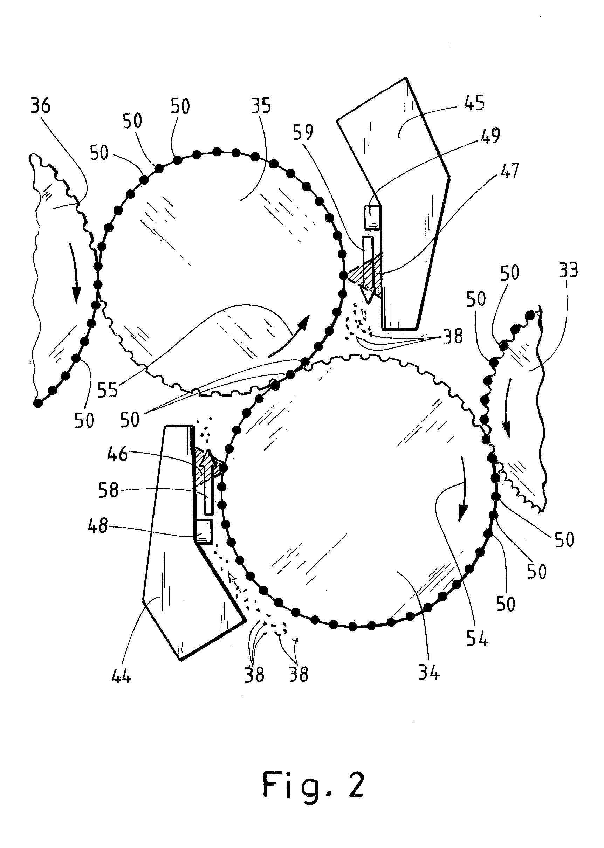

Fig. 2 zeigt schematisch eine Ansicht einer Anordnung von Trommeln, bestehend aus einer Spreiztrommel 33, zwei Prüftrommeln 34, 35 und einer nachfolgenden Fördertrommel 36. Von der Spreiztrommel 33 werden längsaxial gespreizte Paare von Filterzigaretten 50 an die Prüftrommel 34 übergeben. Unter Rotation der Trommeln 33, 34 werden die Filterzigaretten 50 an dem ersten an der Prüftrommel 34 vorgesehenen Prüforgan 44 vorbeitransportiert, wobei die auf der Prüftrommel 34 geförderten Filterzigaretten 50 hierbei eine Prüfzone 46 des Prüforgans 44 durchlaufen. In der Prüfzone 46 werden die Filterzigaretten 50 einer entsprechenden Prüfung im Hinblick auf vorbestimmte Eigenschaften der Filterzigaretten 50 untersucht.

Das an der Prüftrommel 34 benachbart angeordnete Prüforgan 44 ist mit einer Luftvorhangserzeugungseinrichtung 48 ausgebildet, wobei die Luftströmung des von der Luftvorhangserzeugungseinrichtung 48 erzeugten Luftvorhangs 58 derart gerichtet ist, dass die Luftströmungsrichtung des Luftvorhangs 58 zwischen der Oberfläche des Prüforgans 44 und der Oberfläche der Prüftrommel 34, die gemäß der Förderrichtung 54 rotierend angetrieben wird, gerichtet ist, so dass durch den erzeugten Luftvorhang 58 die in den Luftvorhang 58 eintretenden Tabakkrümel 38 in der Umgebung der Prüftrommel 34 beschleunigt werden und durch die Prüfzone 46 beschleunigt hindurchtreten. Hierbei wird je nach Strömungsrichtung und aufgrund der hohen Geschwindigkeiten der beschleunigten Tabakkrümel 38 die Prüfzone 46 zum einen weitestgehend partikelfrei oder partikelarm gehalten bzw. wird die Prüfung an dem Prüforgan 44 verbessert, da bei der Prüfung der in die Prüfzone 46 eintretenden Filterzigaretten 50 zum anderen weniger Partikel in der Prüfzone 46 vorhanden sind. Aufgrund der mit einer überhöhten oder hohen Geschwindigkeiten beaufschlagten Tabakkrümel 38, die durch den Luftvorhang 58 beschleunigt werden, werden diese gegebenenfalls bei der Auswertung entweder nicht erfasst oder entsprechend als ausgeprägte Störsignatur erkannt.

Durch die Entfernung der in der Umgebungsluft mitgeführten bzw. mitbewegten Partikel 38 in der Prüfzone 46 wird die Konzentration der Partikel in der Umgebung der Oberfläche der Prüftrommel 34 herabgesetzt, so dass aufgrund der durch den Luftvorhang beeinflussten Flugbahn der Partikel weniger Partikel 38 in der Prüfzone 46 bei der Prüfung der Filterzigaretten 50 vorhanden sind, wodurch entsprechend weniger Störungen durch Partikel während der durchgeführten Prüfung vom Prüforgan 44 entstehen.

Anschließend werden die Filterzigaretten 50 von der Prüftrommel 34 an eine weitere Prüftrommel 35 übergeben, wobei an der zweiten als Förderorgan ausgebildeten Prüftrommel 35 das Prüforgan 45 angeordnet ist, das eine Prüfzone 47 aufweist, in der die eintretenden Filterzigaretten 50 geprüft werden. Das Prüforgan 45 weist ebenfalls eine Luftvorhangserzeugungseinrichtung 49 auf, die einen Luftvorhang 59 erzeugt, wobei die Luftströmungsrichtung des Luftvorhangs 59 entgegen der Förderrichtung der Filterzigaretten 50 auf der Prüftrommel 35 bzw. entgegen der Förderrichtung der Filterzigaretten 50 auf der Prüftrommel 35 gerichtet ist. Hierdurch werden bezogen auf die Förderrichtung der Filterzigaretten 50 auf der Prüftrommel 35 bzw. der Förderrichtung 55 der Prüftrommel 35 vor dem Eintritt der Filterzigaretten 50 in die Prüfzone 47 die Partikel 38 aufgrund der entgegengerichteten Luftströmung des Luftvorhangs 59 davon abgehalten, in die Prüfzone 47 einzutreten, wodurch bei der Prüfung der in die Prüfzone 47 eintretenden Filterzigaretten 50 weniger Partikel vorhanden sind, da aufgrund des Luftvorhangs 59 die Partikel 38 aus dem trommelnahen Bereich der Fördertrommel 35 beim Eintritt in die Prüfzone 47 abgehalten werden.

Die Luftströmungsrichtung des von der Luftvorhangserzeugungseinrichtung 49 erzeugten Luftvorhangs 59 ist entgegengerichtet der Förderrichtung 55 der Prüftrommel 35, wobei die Luftströmung des Luftvorhangs 59 derart gerichtet ist, dass dieser zwischen der Oberfläche der Prüftrommel 35 und der Oberfläche des Prüforgans 45 hindurchgeführt wird. Die mittels der Prüforgane 44, 45 geprüften Filterzigaretten werden anschließend von der Prüftrommel 35 an eine nachfolgende Fördertrommel 36 übergeben.

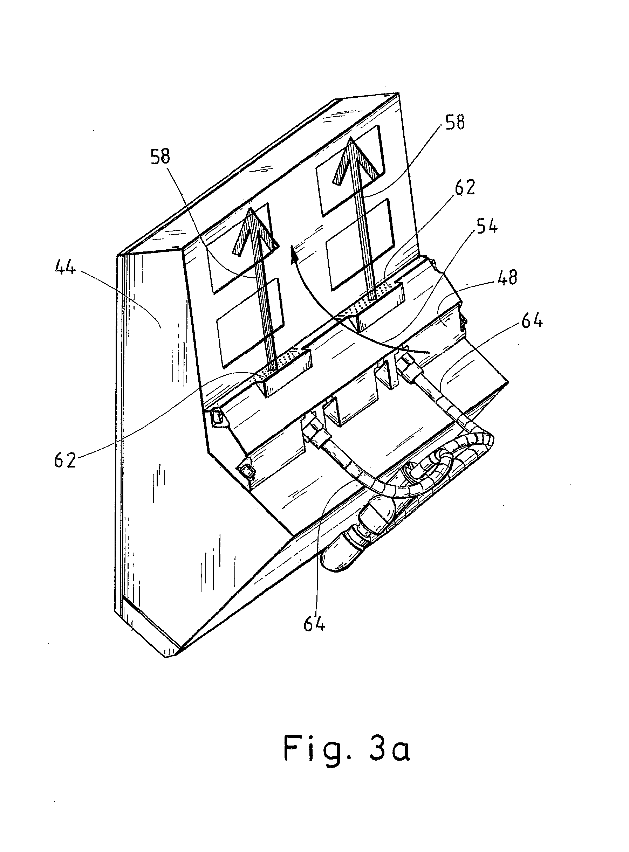

In den Fig. 3a bis 3c sind jeweils verschiedene Ausführungsformen von Prüforganen 44, 45 dargestellt, die an Förderorganen bzw. Fördertrommeln der Tabak verarbeitenden Industrie zur Prüfung von stabförmigen Artikeln verwendet werden. Hierbei sind in den Fig. 3a bis 3c jeweils perspektivische Ansichten schematisch gezeigt.

Beispielsweise sind unter der Bezeichnung OCIS (Optical Cigarette Inspection System) Prüforgane bzw. Prüfeinrichtungen der HAUNI Maschinenbau AG, Hamburg, mittels denen Filterzigaretten auf optische Weise geprüft werden.

Bei dem in Fig. 3a gezeigten Prüforgan 44 ist eine Luftvorhangserzeugungseinrichtung 48 vorgesehen, die für jede Reihe von queraxial hintereinander geförderten Filterzigaretten jeweils eine Düsenanordnung 62 aufweist, wobei jede Düsenanordnung 62 mehrere Durchtrittsdüsen aufweist, die über Verbindungsleitungen 64 mit Druckluft aus einer Druckluftquelle beaufschlagt werden. Hierbei werden im Betrieb der Prüfeinrichtung 44 mittels der Luftvorhangserzeugungseinrichtung 48 ein oder zwei Luftvorhänge 58 erzeugt, die Tabakkrümel, die zwischen dem Prüforgan 44 und der Fördertrommel vorhanden sind, beschleunigen, so dass bei der Prüfung der stabförmigen Artikel in einer Prüfzone des Prüforgans 44 (vgl. Fig. 2) die durch den Luftvorhang 48 beschleunigten Tabakkrümel oder Partikel aus der Prüfzone des Prüforgans beschleunigt entfernt werden.

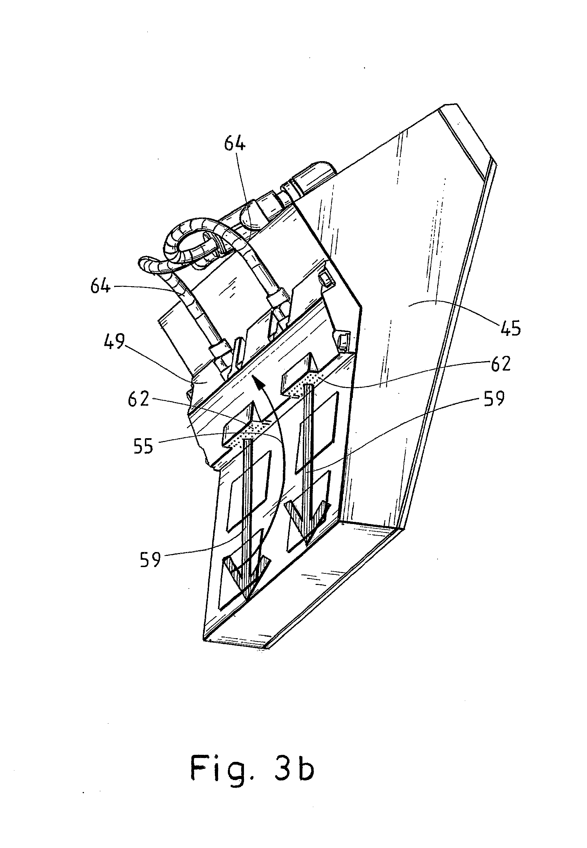

In Fig. 3b ist ein Ausführungsbeispiel für ein Prüforgan 45 schematisch dargestellt, wobei das Prüforgan 45 über eine Luftvorhangserzeugungseinrichtung 49 verfügt, die ebenfalls zwei Düsenanordnungen 62 für jeweils eine Reihe von auf einer Prüftrommel 35 geförderten Filterzigaretten aufweist. Mittels der Düsenanordnungen 62 werden Luftvorhänge 59 erzeugt, die entgegen der Förderrichtung 55 der Prüftrommel 35 (vgl. Fig. 2) gerichtet sind.

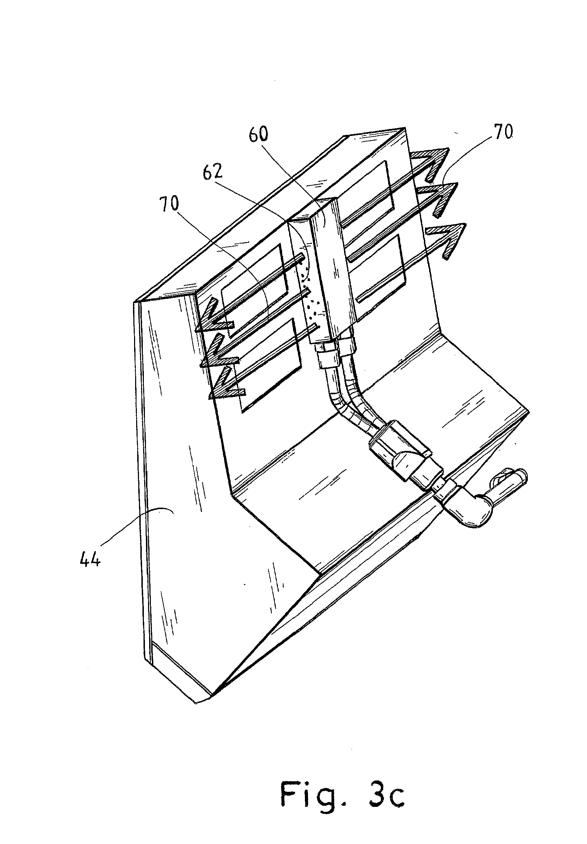

Bei dem in Fig. 3c dargestellten Ausführungsbeispiel für ein Prüforgan 44 an einer Fördertrommel weist das Prüforgan 44 einen Düsenkörper 60 auf, wobei an beiden schmalen Längsseiten des Düsenkörpers 60 Düsenanordnungen 62 angeordnet sind, wodurch bei Beaufschlagung der Düsenanordnungen 62 mittels Druckluft Luftvorhänge 70 beidseits des als Luftvorhangserzeugungseinrichtung ausgebildeten Düsenkörpers 60 erzeugt werden, so dass durch die erzeugten Luftvorhänge 70 Partikel in den Prüfzonen beidseits des Düsenkörpers 60 eintretende Partikel oder Tabakkrümel in der Umgebungsluft einer Fördertrommel in längsaxialer Richtung bezogen auf die Längsachse der zu prüfenden Filterzigaretten in den Prüfzonen jeweils seitlich beschleunigt werden, so dass durch die erzeugten Luftvorhänge 70 die eintretenden Partikel oder Tabakkrümel in der Umgebungsluft beschleunigt aus den Prüfzonen des Prüforgans 44 entfernt werden.

Um einen Luftvorhang zu erzeugen, kann das bestehende Druckluftsystem an einer Maschine der Tabak verarbeitenden Industrie, z.B. Filteransetzmaschine, verwendet werden. Darüber hinaus kann auch ein zusätzliches, eigenständiges Drucklufterzeugungssystem integriert werden oder auch das bestehende Druckluftsystem der Maschine angepasst werden.

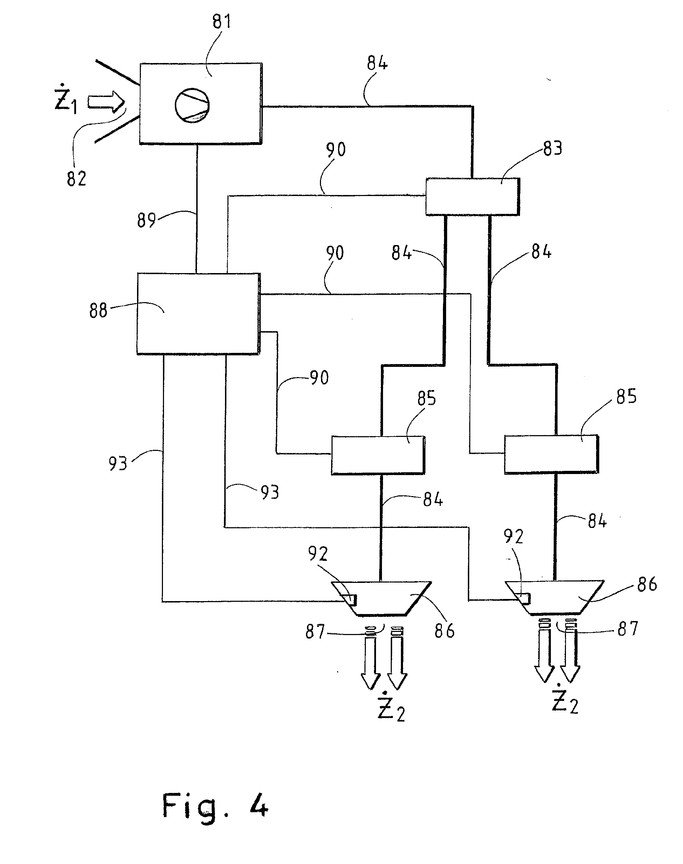

In Fig. 4 ist in einer schematischen Darstellung ein Prinzip einer Drucklufterzeugungsanlage 81 zur Erzeugung eines Luftvorhangs an einer Prüftrommel gezeigt. Mittels der Drucklufterzeugungsanlage 81 ist es möglich, die relevanten Größen Strömungsgeschwindigkeit und Volumenstrom, durch die die Eigenschaften des Luftvorhangs maßgeblich bestimmt werden, an verschiedene Anforderungen oder Situationen an einer Maschine der Tabak verarbeitenden Industrie, wie z.B. Produktionsleistung der Maschine, herzustellende Zigaretten, Anordnung und Geometrie der Bauteile einer Luftvorhangserzeugungseinrichtung (beispielsweise Luftleitungen, Düsen usw.), äußere Einflüsse der Umgebung (z.B. Feuchte) anzupassen. Hierzu ist die Drucklufterzeugungsanlage 81 beispielsweise mit einem Lüfter, Verdichter und Kompressor vorgesehen, wobei entsprechend den Anforderungen zur Erzeugung eines Luftvorhangs an einer Prüftrommel gesteuert oder geregelt wird.

Mittels der Drucklufterzeugungsanlage 81 wird ein Luftmassenstrom mit einem Luftvolumenstrom Ż₁ an einem Lufteintritt 82 der Drucklufterzeugungsanlage 81 angesaugt. Die von der Drucklufterzeugungsanlage 81 erzeugte komprimierte Luft wird über mehrere Leitungen 84 und in den Leitungen 84 vorgesehene Regelventile 83 und 85 zu jeweils einer Düse 86 geleitet. Die Regelventile 83, 85 können dabei in einer Ausgestaltung als Druckregelventile oder als Druckmengenregelventile ausgebildet sein.

An den Düsen 86 der Luftvorhangserzeugungseinrichtung tritt der Luftvolumenstrom Ż₂ an den jeweiligen Luftaustritten 87 aus, wobei der (gesamte) Luftvolumenstrom Ż₂ nicht gleich dem Luftvolumenstrom Ż₁ am Lufteintritt 82 der Drucklufterzeugungsanlage 81 sein muss. Eine Regeleinrichtung 88 ist über mehrere Leitungen 90 jeweils mit den Regelventilen 83/85 verbunden und über eine Leitung 89 mit der Drucklufterzeugungsanlage 81 verbunden. An den Düsen 85 sind ferner Sensoren 92 vorgesehen, um den Druck oder das Volumen oder die Geschwindigkeit der an den Düsen 85 austretenden Luftströme oder gegebenenfalls auch die Temperatur usw. zu erfassen, wobei die Sensoren 92 über Leitungen 93 mit der Regeleinrichtung 88 jeweils verbunden sind.

Mittels der Leitungen 93 empfängt die Regeleinrichtung 88 entsprechende Signale von den Sensoren 92, so dass mittels der Regeleinrichtung 88 über die Leitungen 90 die Regelventile 85 geregelt werden. Ferner wird mittels der Leitung 89 zwischen der Drucklufterzeugungsanlage 81 und der Regeleinrichtung 88 die Drucklufterzeugungsanlage 81 entsprechend geregelt.

Im Rahmen der Erfindung ist ebenfalls denkbar, anstelle einer Regeleinrichtung 88 eine Steuereinrichtung vorzusehen. In diesem Fall sind die Leitungen 93 und die Sensoren 92 entbehrlich, wodurch mittels der Steuereinrichtung über die Leitungen 90 und 89 die Ventile 85 und die Drucklufterzeugungsanlage 81 angesteuert werden.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Belagapparat
- 11: Belagpapierstreifen
- 12: Saugwalze
- 13: Messerwalze
- 21: Zusammenstelltrommel
- 22: Fördertrommel
- 26: Rolltrommel
- 27: Rolleinrichtung
- 28: Trommel
- 29: Trommel
- 30: Fördertrommel
- 31: Schneidtrommel
- 32: Schneidmesser
- 33: Spreiztrommel
- 34: Prüftrommel
- 35: Prüftrommel
- 36: Fördertrommel
- 38: Partikel
- 44: Prüforgan
- 45: Prüforgan
- 46: Prüfzone
- 47: Prüfzone
- 48: Luftvorhangserzeugungseinrichtung
- 49: Luftvorhangserzeugungseinrichtung
- 50: Filterzigarette
- 54: Förderrichtung
- 55: Förderrichtung
- 58: Luftvorhang
- 59: Luftvorhang
- 60: Düsenkörper
- 62: Düsenanordnung
- 64: Verbindungsleitung
- 70: Luftvorhang
- 81: Drucklufterzeugungsanlage
- 82: Lufteintritt
- 83: Regelventil
- 84: Leitung
- 85: Regelventil
- 86: Düse
- 87: Luftaustritt
- 88: Regeleinrichtung
- 89: Verbindung
- 90: Verbindung
- 91: Verbindung
- 92: Sensor
- 93: Verbindung

- M: Trommelanordnung (Filterstopfen)
- T: Trommelanordnung (Tabakstöcke)
- S: Saugluftanschluss
- P: Zigarettenstrangmaschine
- Ż₁: Luftvolumenstrom
- Ż₂: Luftvolumenstrom

## Patentansprüche

1. Verfahren zum Prüfen von stabförmigen Artikeln (50) der Tabak verarbeitenden Industrie, insbesondere Filterzigaretten (50), mittels einer Prüfeinrichtung (44, 45), wobei die stabförmigen Artikel (50) auf einem Förderorgan (34, 35), insbesondere queraxial, gefördert werden und die Artikel (50) mittels einer am Förderorgan (34, 35) vorgesehenen Prüfeinrichtung (44, 45) geprüft werden, **dadurch gekennzeichnet, dass** die in der Umgebung des Förderorgans (34, 35) vorhandene Umgebungsluft und die durch die in der Umgebungsluft transportierten Partikel (38) vor und/oder nach Eintritt in eine Prüfzone (46, 47) der Prüfeinrichtung (44, 45) durch Beaufschlagen der Umgebungsluft und der Partikel (38) in der Umgebungsluft mit einem Luftvorhang (58, 59, 70), der mittels einer, vorzugsweise an der Prüfeinrichtung (44, 45) und/oder an dem Förderorgan (34, 35) angeordneten, Luftvorhangserzeugungseinrichtung (48, 49, 60) erzeugt wird, bewegt, insbesondere beschleunigt und/oder abgelenkt, werden, wobei insbesondere der Luftvorhang (58, 59, 70) in der Prüfzone (46, 47) oder im Bereich der Prüfzone (46, 47), vorzugsweise parallel, beabstandet zur Oberfläche des Förderorgans (34, 35) ausgebildet und gerichtet ist.

2. Verfahren nach Anspruch 1, **dadurch gekennzeichnet, dass** die mit der Umgebungsluft bewegten Partikel (38) in ihrer Flugbahn über die Breite und/oder über die Länge der Prüfzone (46, 47) mittels des erzeugten Luftvorhangs (58, 59, 70) beschleunigt und/oder abgelenkt werden.

3. Verfahren nach Anspruch 1 oder 2, **dadurch gekennzeichnet, dass** bei Beaufschlagen der in der Umgebungsluft vorhandenen und durch die Umgebungsluft bewegten Partikel (38) mittels des Luftvorhangs (58, 59, 70) die Partikelanzahl in der Prüfzone (46, 47) herabgesetzt ist oder wird.

4. Verfahren nach einem der Ansprüche 1 bis 3, **dadurch gekennzeichnet, dass** die Luftvorhangserzeugungseinrichtung (48, 49, 60) derart benachbart am und beabstandet zum Förderorgan (34, 35), vorzugsweise an der Prüfeinrichtung (44, 45), angeordnet ist, dass die Luftströmung des erzeugten Luftvorhangs (58, 59, 70) in Förderrichtung des Förderorgans (34, 35) oder gegen die Förderrichtung des Förderorgans (34, 35) gerichtet ist.

5. Verfahren nach einem der Ansprüche 1 bis 4, **dadurch gekennzeichnet, dass** die Luftvorhangserzeugungseinrichtung (48, 49, 60) derart benachbart am und beabstandet zum Förderorgan (34, 35) angeordnet ist, dass die Luftströmung des erzeugten Luftvorhangs (58, 59, 70) quer, insbesondere senkrecht, zur Förderrichtung des Förderorgans (34, 35) gerichtet ist.

6. Verfahren nach einem der Ansprüche 1 bis 5, **dadurch gekennzeichnet, dass** die Luftströmungsgeschwindigkeit des durch die Luftvorhangserzeugungseinrichtung (48, 49, 60) erzeugten Luftvorhangs (58, 59, 70) größer als die Fördergeschwindigkeit der auf dem Förderorgan (34, 35), insbesondere Fördertrommel (34, 35) oder Prüftrommel, geförderten stabförmigen Artikel (50) ist, wobei insbesondere die Luftströmungsgeschwindigkeit des Luftvorhangs (58, 59, 70) mindestens 1 m/s, vorzugsweise mehr als 10 m/s, weiter vorzugsweise mehr als 20 m/s, beträgt.

7. Verfahren nach einem der Ansprüche 1 bis 6, **dadurch gekennzeichnet, dass** der zur Erzeugung des Luftvorhangs bereitgestellte oder erforderliche Überdruck an der Luftaustrittsöffnung der Luftvorhangserzeugungseinrichtung (48, 49, 60), insbesondere Düsen, derart groß ist, dass die Strömungsgeschwindigkeit und der entsprechende Volumenstrom im Bereich des Luftvorhangs erzeugt werden oder erzeugbar sind.

8. Verfahren nach einem der Ansprüche 1 bis 7, **dadurch gekennzeichnet, dass** mittels der Prüfeinrichtung (44, 45) die Oberfläche der auf dem Förderorgan (34, 35), insbesondere Prüftrommel (34, 35), geförderten stabförmigen Artikel (50) mittels einer optischen Kontrolleinrichtung, insbesondere Kamerasystem, optisch erfasst wird und anschließend ausgewertet wird.

9. Anordnung zum Prüfen von stabförmigen Artikeln der Tabak verarbeitenden Industrie, insbesondere Filterzigaretten, mit einem Förderorgans (34, 35) zum, vorzugsweise queraxialen, Fördern der stabförmigen Artikel (50) und mit einer an dem Förderorgan (34, 35) vorgesehenen Prüfeinrichtung (44, 45) zum Prüfen der auf dem Förderorgan (34, 35) geförderten stabförmigen Artikel (50), **dadurch gekennzeichnet, dass** eine Luftvorhangserzeugungseinrichtung (48, 49, 60) an dem Förderorgan (34, 35) vorgesehen ist, derart, dass die in der Umgebung des Förderorgans (34, 35) vorhandene Umgebungsluft und die durch die in der Umgebungsluft transportierten Partikel (38) durch Beaufschlagen der Umgebungsluft und der Partikel (38) in der Umgebungsluft vor und/oder nach Eintritt in eine Prüfzone (46, 47) der Prüfeinrichtung (44, 45) mit einem Luftvorhang, der mittels einer, vorzugsweise am Förderorgan (34, 35) und/oder an der Prüfeinrichtung angeordneten, Luftvorhangserzeugungseinrichtung (48, 49, 60) erzeugbar ist, bewegbar, insbesondere beschleunigbar, sind, wobei insbesondere der Luftvorhang in der Prüfzone (46, 47) oder im Bereich der Prüfzone (46, 47), insbesondere parallel, beabstandet zur Oberfläche des Förderorgans (34, 35) ausgebildet und gerichtet ist.

10. Anordnung nach Anspruch 9, **dadurch gekennzeichnet, dass** die Luftvorhangserzeugungseinrichtung (48, 49, 60) derart, vorzugsweise an der Prüfeinrichtung (44, 45) und/oder am Förderorgan (34, 35), angeordnet ist, dass die Luftströmung des erzeugten Luftvorhangs (58, 59, 70) in Förderrichtung des Förderorgans (34, 35) oder gegen die Richtung des Förderorgans (34, 35) gerichtet ist.

11. Anordnung nach Anspruch 9 oder 10, **dadurch gekennzeichnet, dass** die Luftvorhangserzeugungseinrichtung (48, 49, 60) derart, vorzugsweise an der Prüfeinrichtung (44, 45) und/oder am Förderorgan (34, 35), angeordnet ist, dass die Luftströmung des erzeugten Luftvorhangs (58, 59, 70) quer, insbesondere senkrecht, zur Förderrichtung des Förderorgans (34, 35) gerichtet ist.

12. Anordnung nach einem der Ansprüche 9 bis 11, **dadurch gekennzeichnet, dass** die Prüfeinrichtung (44, 45) als optische Kontrolleinrichtung für die Oberfläche der stabförmigen Artikel (50) ausgebildet ist.

13. Anordnung nach einem der Ansprüche 9 bis 12, **dadurch gekennzeichnet, dass** die Anordnung unter Verwendung der Luftvorhangserzeugungseinrichtung (48, 49, 60) gemäß dem Verfahren nach einem der Ansprüche 1 bis 8 betreibbar ist oder betrieben wird.

14. Maschine der Tabak verarbeitenden Industrie, insbesondere Filteransetzmaschine, mit wenigstens einer, vorzugsweise zwei, Anordnung zum Prüfen von stabförmigen Artikeln der Tabak verarbeitenden Industrie nach einem der Ansprüche 9 bis 13.
